# EUROPÄISCHE PATENTSCHRIFT

(11) **EP 0 857 772 B1**
(45) Veröffentlichungstag und Bekanntmachung des Hinweises auf die Patenterteilung: **01.09.2004**
(21) Anmeldenummer: 98101950.8
(22) Anmeldetag: 05.02.1998
(51) Int. Cl.: C09K 3/10, C08K 5/54, C08L 33/00, C08L 31/00

(54) **Die Verwendung von Alkylalkoxysilanen zur Erhöhung des Rückstellvermögens von Fugendichtungsmassen**
The use of alkylalkoxysilanes to increase the resilience of joint sealing compounds
L'utilisation des alkylalkoxysilane pour augmenter le coefficient d'élasticité des compositions de jointoiement

(30) Priorität: 06.02.1997 DE 19704553
(43) Veröffentlichungstag der Anmeldung: 12.08.1998
(73) Patentinhaber: Wacker-Chemie GmbH, 81737 München (DE)
(72) Erfinder: Herold, Hardy, Dr., 84489 Burghausen (DE); Mosseveld, Hendrikus, 1562 Krommenie (NL); Kellermann, Rita, 84489 Burghausen (DE)
(74) Vertreter: Schuderer, Michael, Dr.

(56) Entgegenhaltungen:
- EP-A- 0 010 000
- EP-A- 0 199 921
- EP-A- 0 219 796
- EP-A- 0 339 427
- EP-A- 0 423 613
- EP-A- 0 590 660
- DE-U- 29 611 347
- US-A- 4 077 932
- US-A- 5 124 384
- US-A- 5 541 253

## Beschreibung

Die Erfindung betrifft die Verwendung von alkylalkoxysilane zur Erhöhung des Rückestellvermögens von Fugendichtungsmassen auf der Basis von wäßrigen Dispersionen oder in Wasser redispergierbaren Dispersionspulvern von Vinylester-Ethylen-Copolymerisaten oder Acrylsäureesterpolymerisaten.

Dispersionsgebundene Fugendichtungsmassen werden in Bereichen eingesetzt, die keiner Dauerwasserbelastung unterworfen sind. Sie dienen dazu, benachbarte Materialien, auch unterschiedlicher Natur, zu verbinden und auf diese Weise die "Fuge" vor dem Eindringen von Schadstoffen wie Gasen, Flüssigkeiten, insbesondere Wasser zu schützen. Damit werden Schädigungen der darunterliegenden Baustoffe, beispielsweise durch Hinterfeuchtung oder Frost, welche die Baustoffe in deren Wirksamkeit und Dauerhaftigkeit beeinträchtigen würden, verhindert. Das dauerhafte Schließen von Fugen mit Fugendichtungsmassen ist daneben auch aus ästhetischen Gründen erwünscht.

Dispersionsgebundene Fugendichtungsmassen werden vornehmlich in Anschlußfugen und Dehnfugen eingesetzt, da sie im Gegensatz zu Fugendichtungsmassen auf der Basis von Siliconen zu den eher plastischen Systemen zu rechnen sind. Für die Dauerhaftigkeit der Fugenausbildung ist eine ausreichend hohe Haftung an der Fugenflanke Voraussetzung. Des weiteren werden von den Bindemitteln hohe Wasserfestigkeit und Witterungsbeständigkeit beim Außeneinsatz gefordert.

Als Bindemittel enthalten dispersionsgebundeneFugendichtungsmassen Homo- und Copolymerisate von Acrylsäureestern oder Vinylacetat-Ethylen-Copolymerisate. Aus der EP-A 303701 sind Fugenfüller bekannt, welche aus Vinylacetat-Ethylen-Copolymer, CaSO₄-Halbhydrat, Silikat-Mikrohohlkugeln und Zellulosefasern zusammengesetzt sind. Die EP-A 339427 (US-A 5004769) beschreibt Fugendichtungsmassen und Beschichtungsmassen auf Basis von wässrigen Dispersionen von Acrylatpolymerisaten und nichtionischen Celluloseethern. Die EP-A 423613 (US-A 5118730) betrifft eine spezielle Verfahrensweise zur Herstellung von Fugendichtungsmassen auf der Basis von wässrigen Polymerdispersionen und nichtionischen Celluloseethern, wobei die nichtionischen Celluloseether vor deren Zugabe in geringen Mengen Wasser aufgeschlämmt werden.

Für die Dauertauglichkeit von Fugendichtungsmassen, beispielsweise im Außenbereich mit sich witterungsbedingt ausdehnenden und verkürzenden Bauteilen, ist die Fähigkeit, Spannungen durch sich verändernde Fugenbreiten aufzunehmen, eine wichtige Eigenschaft. Dazu ist neben einer guten Haftung eine ausreichende Dehnfähigkeit erforderlich. Daneben sollte die Fugendichtungsmasse in der Lage sein, bei sich verringernder Fugenbreite ihre ursprüngliche Dimensionierung wieder zu erreichen, das heißt über ein gutes Rückstellvermögen verfügen. Die bisher bekannten dispersionsgebundenen Fugendichtungsmassen auf der Basis von Acrylatpolymerisaten oder Vinylacetat-Ethylen-Copolymerisaten zeigen ein unbefriedigendes Rückstellvermögen, da sie sich in ihrem rheologischen Verhalten mehr oder weniger plastisch verformen.

Es bestand daher die Aufgabe, Fugendichtungsmassen auf der Basis von Vinylester-Ethylen-Copolymerisaten oder Acrylsäureesterpolymerisaten zur Verfügung zu stellen, welche sich neben guten Haftungs- und Dehnungseigenschaften vor allem durch ein hohes Rückstellvermögen auszeichnen.

Überraschenderweise wurde gefunden, daß das Rückstellvermögen von Fugendichtungsmassen auf der Basis von Vinylester-Ethylen-Copolymerisaten oder Acrylsäureesterpolymerisaten durch die Zugabe von Silanen zur Dichtungsmasse deutlich verbesser wird.

Gegenstand der Erfindung ist die Verwendung gemäß Anspruch 1.

Geeignete Vinylester-Ethylen-Copolymerisate oder Acrylsäureesterpolymerisate sind in Form deren wässrigen Dispersionen oder als in Wasser redispergierbare Dispersionspulver im Handel erhältlich. Die Herstellung dieser Dispersionen bzw. Dispersionspulver ist dem Fachmann aus der Literatur bekannt, beispielsweise kann analog der in der EP-B 687317 beschriebenen Verfahrensweise zur Emulsionspolymerisation von Vinylester- bzw. Acrylsäureester-Polymerisaten und gegebenenfalls Sprühtrocknung vorgegangen werden.

Bevorzugt werden Vinylacetat-Ethylen-Copolymerisate mit 5 bis 50 Gew% Ethylen.

Im allgemeinen enthält die Fugendichtungsmasse 5 bis 80 Gew% Vinylester-Ethylen-Copolymerisat oder Acrylsäureesterpolymerisat, bezogen auf das Gesamtgewicht der Fugendichtungsmasse. Vorzugsweise 5 bis 50 Gew% in füllstoffhaltigen oder 50 bis 80 Gew% in transparenten Fugendichtungsmassen.

Bevorzugte Alkylalkoxysilane SiRₙ(OR')₄₋ₙ mit n = 1 bis 3 sind solche bei denen R' gleich ist und für einen Methyl- oder Ethylrest steht, und R gleich oder verschieden ist und für ei-. nen Methyl-, Ethyl- oder Propylrest steht, der mit Chlor, einer NH₂- oder einer Glycidoxy-Gruppe substituiert ist. Beispiele hierfür sind Trimethylethoxysilan, Dimethyldiethoxysilan, Methyltriethoxysilan, Methyltrimethoxysilan, Chlorpropyltrimethoxysilan, Aminoethylaminopropyltrimethoxysilan, Aminoethylaminopropyltriethoxysilan, Aminopropylaminoethylmethyldimethoxysilan und Glycidoxypropyltriethoxysilan. Die genannten. Alkylalkoxysilane sind im Handel erhältlich bzw. ist deren Herstellung dem Fachmann bekannt. Beispielsweise aus Houben-Weyl, Methoden der organischen Chemie, Band E20, Georg Thieme Verlag, Stuttgart, 1987.

Vorzugsweise werden die Alkylalkoxysilane SiRₙ(OR')₄₋ₙ in einer Menge von 0.05 bis 0.2 Gew%, bezogen auf das Gesamtgewicht der Fugendichtungsmasse, eingesetzt.

Neben den genannten Bestandteilen können die genannten Fugendichtungsmassen noch weitere Zusätze wie Füllstoffe, Weichmacher, Verdickungsmittel, Dispergiermittel, Entschäumer, Konservierungsmittel, Pigmente, und für den Fall daß Dispersionspulver eingesetzt werden, noch zusätzliches Wasser enthalten.

Üblicherweise enthalten Fugendichtungsmassen 10 bis 60 Gew%, bezogen auf das Gesamtgewicht der Fugendichtungsmasse, ein oder mehrere Füllstoffe. Transparente Fugendichtungsmassen werden ohne Füllstoffanteil hergestellt. Beispiele für Füllstoffe sind Calciumcarbonat, Titandioxid, Schwerspat oder Leichtspat. Falls Weichmacher eingesetzt werden, beträgt deren Anteil im allgemeinen 5 bis 15 Gew%, bezogen auf das Gesamtgewicht der Fugendichtungsmassen. Beispiele für Weichmacher sind modifizierte Petroleumharze oder Chlorparaffine. Als Verdickungsmittel werden im allgemeinen wasserlösliche Polymere wie Polyvinylalkohole oder Celluloseether eingesetzt. Ein Beispiel für anorganische Verdickungsmittel ist hochdisperse Kieselsäure. Der Anteil der Verdickungsmittel am Gesamtgewicht der Fugendichtungsmasse beträgt dabei im allgemeinen 0.1 bis 2 Gew%.

Weitere Zusatzstoffe, die üblicherweise in Anteilen von 0.05 bis 3.0 Gew%, bezogen auf das Gesamtgewicht der Fugendichtungsmasse, eingesetzt werden, sind Dispergiermittel, Entschäumers, Konservierungsmittel und Pigmente. Diese Zusatzstoffe sind im Handel erhältliche Produkte, dem Fachmann bekannt, und bedürfen daher keiner weiteren Erläuterung.

Zur Herstellung der Fugendichtungsmasse werden die Alkylalkoxysilane und die gegebenenfalls eingesetzten Zusatzstoffe der wässrigen Dispersion des Vinylester-Ethylen-Copolymerisats oder Acrylsäureesterpolymerisats zugemischt. Für den Fall, daß das Vinylester-Ethylen-Copolymerisat oder Acrylsäureesterpolymerisat als Dispersionspulver eingesetzt wird, wird im allgemeinen zunächst mit Wasser eine Redispersion hergestellt, in welche die weiteren Bestandteile eingerührt werden.

Mit der erfindungsgemäßen Verwendung erhält man Verfugungen, welche sich nicht nur durch verbessertes Rückstellvermögen auszeichnen, sondern auch höhere mechanische Festigkeit, beispielsweise Reißfestigkeit zeigen.

Die nachfolgenden Beispiele dienen zur weiteren Erläuterung der Erfindung.

### Beispiele 1 bis 4:

In einem Vakuum-Mischer wurden jeweils die in Tabelle 1 genannten Rezepturbestandteile in den in der Tabelle 1 angegebenen Mengen intensiv vermischt.
Das Vinylacetat-Ethylen-Copolymerisat wurde als wässrige Dispersion (Festgehalt 60 %; pH = 5, Viskosität bei 23°C = 6000 mPas) eingesetzt (Handelsname Vinnapas LL 870 der Fa. Wacker-Chemie).
Als Alkylalkoxysilan wurde ein Glycidoxypropyltriethoxysilan (Silan GF 82 der Fa. Wacker-Chemie) eingesetzt.
Als Zusatzstoffe wurden eingesetzt:
Modifiziertes C₉-Petroleumharz (Weichmacher,Handelsname Necires EPX-L)
Polymerweichmacher (Handelsname Plasticizer WP 1)
Dispergiermittel (Handelsname Dispex N 40)
Konservierungsmittel (Handelsname Parmetol DF 12)
Titandioxid-Füllstoff (Handelsname Kronos 2059)
Calciumcarbonat-Füllstoff I (Handelsname Omyacarb 5-GU)
Calciumcarbonat-Füllstoff II (Handelsname Durcal 5)

### Beispiele 5 bis 8:

In einem Vakuum-Mischer wurden jeweils die in Tabelle 2 genannten Rezepturbestandteile in den in der Tabelle 2 angegebenen Mengen intensiv vermischt.
Das Vinylacetat-Ethylen-Copolymerisat wurde als wässrige Dispersion (Festgehalt 65 %; pH = 5, Viskosität bei 23°C = 6000 mPas) eingesetzt (Handelsname Vinnapas LL 6078 der Fa. Wacker-Chemie).
Als Alkylalkoxysilan wurde ein Glycidoxypropyltriethoxysilan (Silan GF 82 der Fa. Wacker-Chemie) eingesetzt.
Als Zusatzstoffe wurden eingesetzt:
Polymerweichmacher (Handelsname Plasticizer WP 1)
Dispergiermittel (Handelsname Dispex N 40)
Konservierungsmittel (Handelsname Parmetol DF 12)
Titandioxid-Füllstoff (Handelsname Kronos 2059)
Calciumcarbonat-Füllstoff (Handelsname Omyacarb 5-GU)

### Anwendungstechnische Prüfung:

### Rückstellvermögen:

Das Rückstellvermögen wurde nach DIN 52458 mit einem Aluminium-Prüfkörper nach 50 % Dehnung über den in den Tabellen angegebenen Zeitraum ermittelt.

### Reißfestigkeit:

Die Reißfestigkeit wurde nach 28 Tagen Lagerung in Normklima im Zugversuch nach DIN 53504 mit einer Instron-Zugmaschine bei einer Zuggeschwindigkeit von 10 mm/min bestimmt.

Die Ergebnisse der anwendungstechnischen Prüfungen sind in den Tabellen 1 und 2 zusammengefaßt. Die Beispiele 1, 3 und 5 sind Vergleichsbeispiele. Der Vergleich der Beispiele mit den Vergleichsbeispielen zeigt, daß die Alkylalkoxysilan-modifizierten Fugendichtungsmassen ein deutlich besseres Rückstellvermögen und höhere Reißfestigkeit zeigen.

**TABELLE 1**

| Beispiel | 1 | 2 | 3 | 4 |
|---|---|---|---|---|
| Polymerdispersion | 700 | 700 | 700 | 700 |
| Weichmacher | 105 | 105 | - | - |
| Polymerweichmacher | - | - | 100 | 100 |
| Dispergiermittel | 8 | 8 | 8 | 8 |
| Konservierungsmittel | 2 | 2 | 2 | 2 |
| Ammoniak | 1,5 | 1,5 | 1,5 | 1,5 |
| TiO₂-Füllstoff | 20 | 20 | 30 | 30 |
| CaCO₃-Füllstoff I | 1.200 | 1.200 | - | - |
| CaCO₃-Füllstoff II | - | - | 1.200 | 1.200 |
| Alkylalkoxysilan | - | 3,5 | - | 7 |
| | | | | |
| Rückstellvermögen nach 24 h in % | 44,3 | 70,7 | 56,9 | 76,8 |
| | | | | |
| Reißfestigkeit(N/mm²) | 0,02 | 0,11 | 0,01 | 0,08 |

**TABELLE 2**

| Beispiel | 5 | 6 | 7 | 8 |
|---|---|---|---|---|
| Polymerdispersion | 680 | 680 | 680 | 680 |
| NaOH (20 %) | 2 | 2 | 2 | 2 |
| Polymerweichmacher | 105 | 105 | 105 | 105 |
| Dispergiermittel | 10 | 10 | 10 | 10 |
| Konservierungsmittel | 2 | 2 | 2 | 2 |
| TiO₂-Füllstoff | 30 | 30 | 30 | 30 |
| CaCO₃-Füllstoff | 1.200 | 1.200 | 1.200 | 1.200 |
| Alkylalkoxysilan | - | 0,68 | 1,36 | 2,04 |
| | | | | |
| Rückstellvermögen nach 1 h in % | 18 | 27,8 | 38,2 | 45,3 |
| Rückstellvermögen nach 24 h in % | 28,3 | 34,7 | 51,2 | 61,5 |

## Patentansprüche

1. Verwendung von Alkylalkoxysilane der allgemeinen Formel SiRₙ(OR')₄₋ₙ mit n = 1 bis 3, wobei R' für gleiche oder verschiedene Alkylreste oder Monoalkylglykolreste mit 1 bis 8 C-Atomen steht, und R gleich oder verschieden ist und Alkylreste mit 1 bis 8 C-Atomen bedeutet, welche gegebenenfalls mit Halogenen wie Chlor, mit Ether-, Ester-, Amid-, Hydroxyl-, Amino-, Carboxyl-, Epoxy-, Carbonsäureanhydrid-, und Carbonylgruppen substituiert sein können zur Erhöhung des Rückstellvermögens, bestimmt nach dem Verfahren gemäß DIN 52458, von Fugendichtungsmassen auf der Basis von Vinylester-Ethylen-Copolymerisaten von Vinylestern von Alkylcarbonsäuren mit 1 bis 12 C-Atomen oder deren Gemischen und 5 bis 50 Gew.-% Ethylen, oder Homo- und Copolymerisaten von Estern der Acrylsäure mit Alkoholen mit 1 bis 8 C-Atomen, gegebenenfalls in Kombination mit Styrol, in Form deren wässrigen Dispersionen oder in Wasser redispergierbaren Dispersionspulvern sowie gegebenenfalls weiteren Zusätzen wie Füllstoffe, Weichmacher, Verdickungsmittel, Dispergiermittel, Entschäumer, Konservierungsmittel, Pigmente und Wasser.

2. Verwendung nach Anspruch 1, **dadurch gekennzeichnet, dass** als Alkylalkoxysilane SiRₙ(OR')₄₋ₙ mit n = 1 bis 3 solche enthalten sind, bei denen R' gleich ist und für einen Methyl- oder Ethylrest steht, und R gleich oder verschieden ist und für einen Methyl-, Ethyl- oder Propylrest steht, der mit Chlor, einer NH₂- oder einer Glycidoxy-Gruppe substituiert ist.

3. Verwendung nach Anspruch 1, **dadurch gekennzeichnet, dass** die Alkylalkoxysilane SiRₙ(OR')₄₋ₙ in einer Menge von 0.05 bis 0.2 Gew%, bezogen auf das Gesamtgewicht der Fugendichtungsmasse, enthalten sind.

4. Verwendung nach Anspruch 1 bis 3, **dadurch gekennzeichnet, dass** als Vinylester-Ethylen-Copolymerisat ein Vinylacetat-Ethylen-Copolymerisat mit 5 bis 50 Gew% Ethylen enthalten ist.

5. Verwendung nach Anspruch 1 bis 4, **dadurch gekennzeichnet, dass** 5 bis 80 Gew.-% Vinylester-Ethylen-Copolymerisat oder Acrylsäureesterpolymerisat, 10 bis 60 Gew%, ein oder mehrere Füllstoffe, 0.1 bis 2 Gew% Verdickungsmittel, jeweils bezogen auf das Gesamtgewicht der Fugendichtungsmasse, enthalten sind.

## Claims

1. Use of alkylalkoxysilanes of the general formula SiRₙ(R')₄₋ₙ, where n is from 1 to 3, where R' are identical or different alkyl radicals or monoalkyl glycol radicals having from 1 to 8 carbon atoms and R are identical or different and are alkyl radicals having from 1 to 8 carbon atoms which may, if desired, be substituted with halogens, such as chlorine, or with ether, ester, amide, hydroxyl, amino, carboxyl, epoxy, carboxylic anhydride or carbonyl groups, to increase the resilience, determined by the method of DIN 52458, of jointing compounds which are based on vinyl ester-ethylene copolymers of vinyl esters of alkylcarboxylic acids having form 1 to 12 carbon atoms or mixtures of these and from 5 to 50% by weight of ethylene, or on homo- and copolymers of acrylates of alcohols having from 1 to 8 carbon atoms, in combination with styrene if desired in the form of their aqueous dispersions or of water-redispersible powders with, if desired, other additives, such as fillers, plasticizers, thickeners, dispersants, antifoams, preservatives, pigments and water.

2. Use according to Claim 1, **characterized in that** the alkylalkoxysilanes SiRₙ(OR')₄₋ₙ present, where n is from 1 to 3, are those in which R' are identical and are methyl or ethyl radicals, and R are identical or different and are methyl, ethyl or propyl radicals, substituted with chlorine, with an NH₂- or with a glycidoxy group.

3. Use according to Claim 1, **characterized in that** the alkylalkoxysilanes SiRₙ(OR')₄₋ₙ are present in an amount of from 0.05 to 0.2% by weight, based on the total weight of the jointing compound.

4. Use according to Claims 1 to 3, **characterized in that** the vinyl ester-ethylene copolymer present is vinyl acetate-ethylene copolymer having from 5 to 50% by weight of ethylene.

5. Use according to Claims 1 to 4, **characterized in that** the jointing compound comprises from 5 to 80% by weight of vinyl ester-ethylene copolymer or acrylate polymer, from 10 to 60% by weight of one or more fillers and from 0.1 to 2% by weight of thickeners, based in each case on the total weight of the jointing compound.

## Revendications

1. Utilisation d'alkylalcoxysilanes de formule générale SiRₙ(OR')₄₋ₙ avec n = 1 à 3, R' représentant des radicaux alkyle ou monoalkylglycol identiques ou différents comprenant 1 à 8 atomes de carbone et R étant identique ou différent et signifiant des radicaux alkyle comprenant 1 à 8 atomes de carbone, qui peuvent le cas échéant être substitués par des halogènes, tels que le chlore, par des groupes éther, ester, amide, hydroxyle, amino, carboxyle, époxy, anhydride de l'acide carboxylique et carbonyle, pour augmenter la résilience, déterminée selon la norme DIN 52458, de masses d'étanchéité pour joints à base de copolymères d'esters de vinyle et d'éthylène, d'esters vinyliques d'acides alkylcarboxyliques comprenant 1 à 12 atomes de carbone ou leurs mélanges et 5 à 50% en poids d'éthylène ou d'homopolymères et de copolymères d'esters de l'acide acrylique avec des alcools comprenant 1 à 8 atomes de carbone, le cas échéant en combinaison avec le styrène, sous forme de leurs dispersions aqueuses ou sous forme de poudres de dispersion redispersibles dans l'eau ainsi que le cas échéant d'autres additifs tels que des charges, des plastifiants, des épaississants, des dispersants, des anti-mousses, des conservateurs, des pigments et de l'eau.

2. Utilisation selon la revendication 1, **caractérisée en ce que** sont contenus, en tant qu'alkylalcoxysilanes SiRₙ(OR')₄₋ₙ avec n = 1 à 3, ceux dans lesquels R' est identique et représente un radical méthyle ou éthyle et R est identique ou différent et représente un radical méthyle, éthyle ou propyle, qui est substitué par chlore, un groupe NH₂ ou glycidoxy.

3. Utilisation selon la revendication 1, **caractérisée en ce que** les alkylalcoxysilanes SiRₙ(OR')₄₋ₙ sont contenus en une quantité de 0,05 à 0,2% en poids par rapport au poids total de la masse d'étanchéité pour joints.

4. Utilisation selon la revendication 1 à 3, **caractérisée en ce qu'**est contenu, comme copolymère d'ester de vinyle et d'éthylène, un copolymère d'acétate de vinyle et d'éthylène présentant 5 à 50% en poids d'éthylène.

5. Utilisation selon la revendication 1 à 4, **caractérisée en ce que** sont contenus 5 à 80% en poids de copolymère d'ester de vinyle et d'éthylène ou de polymère d'ester de l'acide acrylique, 10 à 60% en poids d'une ou de plusieurs charges, 0,1 à 2% en poids d'épaississant, à chaque fois par rapport au poids total de la masse d'étanchéité pour joints.
